# EUROPÄISCHE PATENTSCHRIFT

(11) **EP 0 878 041 B1**
(45) Veröffentlichungstag und Bekanntmachung des Hinweises auf die Patenterteilung: **27.10.1999**
(21) Anmeldenummer: 97907006.7
(22) Anmeldetag: 20.01.1997
(51) Int. Cl.: H02B 13/065

(54) **GEKAPSELTE ANLAGE**
ENCASED ARRANGEMENT
DISPOSITIF BLINDE

(30) Priorität: 31.01.1996 DE 19603459
(43) Veröffentlichungstag der Anmeldung: 18.11.1998
(73) Patentinhaber: SIEMENS AKTIENGESELLSCHAFT, 80333 München (DE)
(72) Erfinder: BAUERSCHMIDT, Peter, D-91126 Schwabach (DE); BEIERL, Ottmar, D-91086 Aurachtal (DE); BULST, Wolf-Eckhart, D-81739 München (DE); MAGORI, Valentin, D-81539 München (DE); OSTERTAG, Thomas, D-85464 Finsing (DE); REINDL, Leonhard, D-83071 Stephanskirchen (DE); SCHOLL, Gerd, D-80636 München (DE); SCZESNY, Oliver, D-85609 Aschheim (DE); LORENZ, Dieter, D-12207 Berlin (DE)
(86) Internationale Anmeldenummer: DE9700092
(87) Internationale Veröffentlichungsnummer: WO9728589

(56) Entgegenhaltungen:
- EP-A- 0 314 849
- EP-A- 0 673 098
- DE-A- 2 427 830
- DE-A- 2 546 694
- DE-A- 4 116 281
- DE-U- 9 420 199
- US-A- 4 158 810
- IEEE TRANSACTIONS ON POWER DELIVERY, Januar 1992, NEW YORK, US, Seiten 202-206, XP000247113 YOSHIZUMI SERIZAWA ET AL.: "Probablistic investigations on bit error ratio requirement for digital teleprotection employing digital microwave links"

## Beschreibung

Die Erfindung betrifft eine gekapselte Anlage für elektrische Energie mit mehreren im Innenraum angeordneten Sensoren.

Aus dem deutschen Gebrauchsmuster 94 20 199 ist eine metallgekapselte Hochspannungsschaltanlage bekannt, bei der in einem ihrer Gasraume ein Oberflachenwellenelement (OFW) angeordnet ist. Das OFW dien't zum Nachweis von Gasanteilen, die durch Lichtbogeneinwirkung auf das in der Kapselung enthaltene Löschgas entstehen oder zur Detektion von Druckwellen. Dabei ist an der Außenseite der Kapselung eine Antenne angeordnet, die zur drahtlosen Informationsübertragung mit einer Auswerteeinrichtung dient. In der DE 195 14 342 C1 ist die Verwendung von OFW-Sensoren bei einem Hochspannungskabel beschreiben (nachveröffentlicht).

Aus dem Aufsatz "Akustische Oberflächenwellen-Technologie für Innovationen" aus Siemens-Zeitschrift Spezial, FuE, Frühjahr 1994, ist prinzipiell die Anwendung von OFW-Sensoren in der Hochspannungstechnik bekannt. Dabei ist auch bereits vorgesehen, den OFW-Sensor im Behälter und seine Antenne außen zu befestigen.

Der Erfindung liegt die Aufgabe zugrunde, eine einfache Lösung für die Anordnung von Sende- und Empfangselementen zur Informationsübertragung an einer gekapselten Anlage für elektrische Energie anzugeben, wobei eine sichere Überwachung möglich sein soll.

Diese Aufgabe wird erfindungsgemäß durch die Merkmale des Anspruchs 1 gelöst.

Diese Lösung erlaubt mit einfachen Mitteln eine Überwachung vieler Funktionen mittels Fernabfrage, ohne daß innerhalb der Kapselung ein verdrahtungstechnischer oder mechanischer Aufwand entsteht. Es brauchen nur die gewünschten Sensoren montiert werden. Diese Lösung ist auch für bestehende Anlagen geeignet und leicht erweiterbar, wobei auch unter ungünstigen Platzbedingungen eine Unterbringung der Sensoren in der Kapselung der Anlage möglich ist.

Die Sensoren sind bevorzugt als Oberflächenwellensensoren (OFW) ausgebildet. Diese weisen eine kleine Baugröße und eine hohe Zuverlässigkeit auf. Dadurch ist eine feldtechnisch günstige Unterbringung im Innenraum der Kapselung möglich, wobei eine hohe Betriebssicherheit gegeben ist. In einer speziellen Ausführungsform weisen die Sensoren die Form einer Scheckkarte auf, wobei der wesentliche Teil dieser Form mit Vorteil als Antennenelement dient.

Die Sensoren können zumindest teilweise zum Erfassen unterschiedlicher Meßgrößen ausgebildet sein, wodurch eine Vielzahl an unterschiedlichen Informationen und /oder Meßwerten erfaßbar sind. Die Sensoren können dabei in unterschiedlichen Teilräumen, insbesondere Gasräumen, der Anlage angeordnet sein. Dies gilt selbstverständlich nur insofern eine Informationsübertragung zwischen zwei Teilräumen durch ihre Abschottung möglich ist.

Die Sensoren können als aktive oder bevorzugt als passive Bauteile ausgebildet sein. Damit kann den jeweiligen Bedingungen am jeweiligen Einbauort Rechnung getragen werden. Eine passive Ausführung hat zum Vorteil, daß keinerlei Elektronik eingesetzt werden muß. Dies ist für einen Einsatz auf Hochspannungspotential günstig.

Die Sensoren können mit Vorteil auf dem Potential der Kapselung oder auf dem Potential eines Leiters in der Kapselung angeordnet sein. Dadurch ist keine Beschränkung auf bestimmte Erfassungswerte, Potentialverhältnisse oder Einbauorte gegeben. Der Einbauort kann sogar beweglich sein (z.B. auf einer Schaltstange). Zusätzliche Potentialtrennmittel sind nicht nötig.

Mit Vorteil weist die Überwachungseinrichtung zumindest eine zusätzliche Schnittstelle zum Informationsaustausch mit weiteren Sensoren, OFWs, Meßfühlern oder Erfassungseinrichtungen auf. Damit ist eine Gesamteinbindung weiterer Informationsquellen - auch außerhalb der Kapselung - möglich, wodurch ein Multisensorkonzept gegeben ist.

Die weitere Schnittstelle oder Schnittstellenkann/können als leitungsgebundene Schnittstelle/n , insbesondere elektrische, akustische oder optische Schnittstelle/n, oder als drahtlose Schnittstelle ausgebildet sein, wodurch eine Ankopplung verschiedenster Informationsquellen möglich ist.

Es ist günstig, wenn eine Schnittstelle zur Ankopplung einer neben- oder übergeordneten Überwachungseinrichtung vorgesehen ist. Die Schnittstelle kann dann bevorzugt als Busschnittstelle ausgebildet sein, wodurch eine hohe Datenübertragungsrate möglich ist.

Bevorzugt ist für die selektive Abfrage eine Codierung vorgesehen. Auf diese Weise ist eine Unterscheidung der jeweiligen Informationen und Zuordnung zu den jeweiligen Quellen oder Sensoren gegeben. Die Codierung kann durch Hardware oder durch eine verfahrenstechnische Maßnahme, z.B. Software, realisiert sein.

Dabei können für die Codierung den jeweiligen Sensoren unterschiedliche Frequenzen für die Informationsübertragung zugeordnet sein. Jeder Sensor hat damit einen eigenen Informationsweg oder Kanal.

Die Codierung kann alternativ oder zusätzlich in Verbindung mit einem Frequenz- oder Zeitmultiplexverfahren erfolgen. Damit ist eine günstige, mehrfache Ausnutzung vorhandener Fequenzkanäle möglich.

Nach einer weiteren Alternative kann die Codierung durch Polarisation, z.B. der verwendeten elektromagnetischen Welle gegebenenfalls mit einer ausrichtbaren Antenne, oder Korrelation erfolgen. Diese Art der Codierung ist günstig für die Anwendung in Metallkapselungen. Korrelationsverfahren sind prinzipiell aus der Radartechnik bekannt, wobei mit einem Antwortsignal des Sensors ein Signalmuster zurückgesendet wird, das durch Korrelation erkannt wird.

Die Codierung kann auch durch eine Kennung im Sende- oder Antwortsignal beim Informationsaustausch erfolgen. Dadurch ist in jedem Fall eine selektive Erkennbarkeit in der Sende- und Empfangseinrichtung gegeben.

Die Kapselung kann metallisch sein, wobei eine bevorzugte Verwendung der Anlage für Hoch- oder Mittelspannung gegeben ist. Die dort umfangreich anfallenden Informationen lassen sich somit sicher und einfach verarbeiten. Außerdem ist dadurch eine Abschirmung nach innen und außen gegeben. Innerhalb der Kapselung ist dann zumindest ein Schaltgerät oder ein Leiter angeordnet. Die Anlage ist dann somit als Schaltanlage oder Rohrleiter ausgebildet.

Die Antennenelemente können wahlweise für die Übertragung optischer, akustischer oder elektromagnetischer Wellen ausgebildet sein, wobei je nach Einsatzfall bei größtmöglicher Übertragungsrate eine im Hinblick auf eine hohe Übertragungssicherheit und geringe Störempfindlichkeit optimierte Lösung möglich ist. Die vorliegende Lösung ist besonders einfach und läßt sich bei neuen und bestehenden Anlagen problemlos integrieren. Die Anbringung der Antennenelemente erfolgt ohne aufwendige Maßnahmen.

Durch die Erfindung ist eine umfangreiche Überwachung einer Schaltanlage, eines Rohrleiters oder eines gekapselten Bauteils möglich, wobei eine Vielzahl von Sensoren, insbesondere OFWs, über ein Antennenelement selektiv fernabfragbar sind. Die Überwachung kann dabei gasraumgenau sein, wobei sich insbesondere bei großen gasisolierten Schaltanlagen gegenüber einer leitungsgebundenen Überwachung eine erhebliche Kosten- und Aufwandsersparnis gegeben ist.

Unter dem Begriff "gekapselte Anlage" werden vorliegend allgemein Anlagenteile der elektrischen Energieverteilung, insbesondere für Hoch- oder Mittelspannung, verstanden, die eine Kapselung, ein Gehäuse oder einen Kessel aufweisen, worin zumindest ein elektrisches Bauteil untergebracht ist. Beispiele hierzu sind: Ein gekapselter Trenn- oder Leistungsschalter, ein gekapseltes Schaltwerk, ein SF6-isolierter Transformator oder ein SF6-Rohrleiter.

Ein Ausführungsbeispiel, weitere Vorteile und Details der Erfindung werden nachfolgend anhand der Zeichnung näher erläutert. Es zeigen:
- FIG 1: eine erste Schaltanlage mit OFWs in einem Längsschnitt,
- FIG 2: eine zweite Schaltanlage mit weiteren OFWs außerhalb seiner Kapselung und
- FIG 3: eine dritte Schaltanlage mit einer optischen Informationsübertragung.

Zunächst wird allgemein eine Schaltanlage mit einer Überwachungseinrichtung erläutert, wobei eine Informationsübertragung mit Hochfrequenz verwendet wird. Es versteht sich von selbst, daß die beschriebene Überwachungseinrichtung auch für andere Funktionen innerhalb der Schaltanlage, z.B. zur Erfassung einer Schaltstellung ohne Sensoren nach einem Radarprinzip, für zusätzliche Steuerungsaufgaben oder rein zur Informationsübertragung, verwendbar ist.

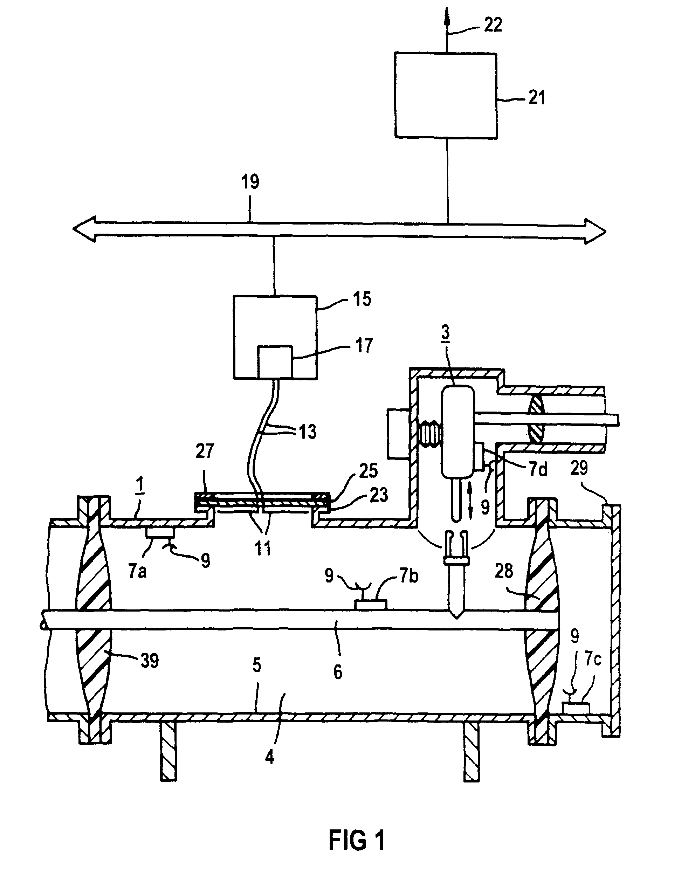

FIG 1 zeigt eine gekapselte, gasisolierte Schaltanlage 1, wie sie beispielsweise aus dem Stand der Technik gemäß dem obengenannten Deutschen Gebrauchsmuster 94 20 199 bekannt ist. Die Schaltanlage 1 ist für Höchst-, Hoch- oder Mittelspannung geeignet. Unter Schaltanlage wird hier auch ein gekapselter Rohrleiter ohne Schaltelement verstanden.

In diesem Längsschnitt durch einen Teil der Schaltanlage 1 ist ein Abzweig mit einem Schaltgerät 3, insbesondere einem Trenner oder einer Unterbrechereinheit, gezeigt. Zentral in der Kapselung 5 verläuft eine Stromschiene 6 als elektrischer Leiter. Zu näheren Details des Schaltgeräts 3 und dessen Funktion wird auf das obengenannte Gebrauchsmuster verwiesen. Im Innenraum 4 der Kapselung 5 der Schaltanlage 1 sind als Sensoren Oberflächenwellensensoren (OFW) für verschiedenste Aufgaben, beispielsweise OFW 7a für eine Temperaturerfassung, OFW 7b für eine Stromerfassung, OFW 7c für eine Gaserkennung und OFW 7d für eine Stellungserkennung, angeordnet. Es sind dabei auch weitere OFWs für weitere Funktionen oder Aufgaben, z.B. Lichterkennung, Druckmessung usw., denkbar.

Jeder OFW weist als Empfangs- und Sendemittel zumindest eine als Sendeempfangselement dienende Antenne 9 zur Informationsübertragung, insbesondere zur Abfrage, auf. Die Informationsübertragung erfolgt dabei von den OFWs 7a bis 7d zu einer zentralen, für alle OFWs 7a bis 7d wirksamen Sende- und Empfangsantenne, die nachfolgend als Antennenelement 11 bezeichnet ist.

Unter Antenne, Sende- und Empfangsantenne, Antennenelement oder Empfangs- und Sendemittel werden hier jegliche Strahlungs- und Empfangselemente verstanden, die eine Abstrahlung und/oder einen Empfang von elektromagnetischen oder optischen Wellen ermöglichen, beispielsweise Funkantennen, Ultraschall- oder optische Sende- und Empfangselemente (z. B. Infrarotelemente), wobei auch eine Aufteilung in Sende- und Empfangsrichtung umfaßt sein kann. Prinzipiell ist auch eine akustische Informationsübertragung mit entsprechend ausgebildeten Abstrahl- und Empfangsmittel denkbar. Die Ausführung gemäß FIG 1 bezieht sich beispielhatt auf eine Funk-Informationsübertragung.

Das Antennenelement 11 ist über geeignete Leitungen 13, z.B. einem Koaxialkabel, gegebenenfalls unter Zwischenschaltung eines Anpaßgliedes, mit einer Steuer- und Überwachungseinrichtung (nachfolgend als Überwachungseinrichtung 15 bezeichnet) verbunden. Diese umfaßt ein Sende- und Empfangsteil 17 und eine weitere nicht näher gezeigte Einrichtung zur Signalauswertung, wobei gegebenenfalls ein Prozessor mit Speichereinrichtung umfaßt sein kann.

Das Sende- und Empfangsteil 17 oder zumindest Teile hiervon können prinzipiell auch dezentral bei dem Antennenelement 11 angeordnet sein, so daß zwischen der Überwachungseinrichtung 15 und dem Antennenelement 11 lediglich ein leistungsarmer Datenverkehr stattfindet. Die Sendeleistung wird dann dezentral erzeugt.

Es ist auch denkbar, daß das Antennenelement 11 mit einer dezentralen Einrichtung leitungsgebunden oder drahtlos direkt mit einem Bus 19 verbunden ist. Die Überwachungseinrichtung 15 kann mit dem Sende- und Empfangsteil 17 und dem angeschlossenen Antennenelement 11 im Sinne der vorliegenden Idee auch als Sendeempfangseinrichtung oder Transceiver bezeichnet werden.

Die Überwachungseinrichtung 15 kann beispielsweise eine zentrale Einheit in einer Schaltanlage oder auch eine abzweig- oder gerätebezogene Einrichtung sein, die über eine weitere Datenverbindung, z.B. über den Bus 19 mit einer übergeordneten Zentrale 21 datentechnisch in Verbindung steht. Diese Zentrale 21 kann eine Nahsteuerzentrale sein, welche wiederum über eine geeignete Schnittstelle 22 mit einer übergeordneten Netzleitstelle in Verbindung steht.

Selbstverständlich umfaßt zumindest die Zentrale 21 geeignete Bedien- und Anzeigemittel, z.B. eine Tastatur und einen Bildschirm, für den Betrieb der Schaltanlage 1. Über geeignete nicht näher gezeigte Schnittstellen ist auch ein portables Gerät, z.B. ein tragbarer Computer oder ein Laptop, zur Bedienung oder für sonstige Ein- und Ausgaben an verschiedenste Stellen des in der Figur 1 gezeigten Systems, z.B. am Bus 19 oder an der Steuereinrichtung 15, anschließbar.

Die gezeigten Datenverbindungen können beliebig, z. B. als leitungsgebundene Verbindung, insbesondere Drahtleitung oder Lichtleiter, oder drahtlose Verbindung, z.B. Funk-, Schall- oder optische Verbindung, ausgeführt sein.

Im vorliegenden Beispiel ist das Antennenelement 11 innerhalb der Kapselung 5 an einer Öffnung angeordnet. Die Öffnung ist dabei von einem Flansch 23 gebildet, der mit einem Verschlußelement 25, z.B. einem Deckel und einem Druckring 27, verschlossen ist. Selbstverständlich sind hier nicht näher gezeigte Verschraubungen für die Flanschverbindung nach dem Stand der Technik vorzusehen.

Das Antennenelement 11 liegt somit innerhalb der Kapselung 5, so daß beste Bedingungen für eine problemlose Informationsübertragung zu den OFWs 7a bis 7d gegeben ist. Da das Antennenelement 11 quasi innerhalb eines Stutzens liegt und nicht in den Innenraum 4 hineinragt, sind hier elektrische oder feldtechnische Probleme vermieden. Außerdem bildet das Antennenelement 11 mit einem ohnehin von der Kapselung 5 lösbaren Bauteil eine Baueinheit, so daß es einfach zugänglich oder auch nachrüstbar ist.

Die OFWs 7a bis 7d sind dabei zum Teil an der Kapselung 5, zum Teil an der Stromschiene 6, auf einem beweglichen Teil des Schaltgeräts 3 oder auch an oder hinter einem ersten Stützer 28, gegebenenfalls in einem getrennten Gasraum, angeordnet. Gegebenenfalls können mehrere Sensoren für unterschiedliche Funktionen gesammelt an einem Ort angeordnet sein und eine gemeinsame Antenne aufweisen. Es ist auch möglich, daß ein Sensor mehrere Meßfunktionen beinhaltet. Vorteilhafterweise können die Sensoren nach Art und Größe einer Scheckkarte ausgebildet sein, wobei der wesentliche Teil der Karte die Antenne bildet.

Wesentlich für die Funktion der gesamten Überwachung ist, daß eine sichere Funk- oder Datenverbindung innerhalb der Kapselung 5 besteht. Dazu ist der Stützer 28 aus einem dielektrischen Material gefertigt, so daß die Hochfrequenzübertragung auch zwischen dem Antennenelement 11 und dem hinter dem Stützer 28 liegenden OFW 7c nicht beeinträchtigt ist. Bei anderen Übertragungsmethoden ist das Material des Stützers entsprechend vorzusehen (Z.B. Glas bei einer optischen Übertragung).

Der Flansch 23 oder die benötigte Öffnung zur Einkopplung kann beispielsweise Teil einer vorhandenen Wartungsöffnung, eines Gasbefüllungsstutzens, einer Gießharzeinfüllöffnung, eines Schaulochs oder auch eines Endflansches sein. Sinngemäß sind daher die hier beispielhaft beschriebenen Ausführungen für jegliche mögliche Öffnungen an Schaltanlagen, beispielsweise auch für den gezeigten Endflansch 29, anwendbar. Es kann auch eine speziell angebrachte Öffnung verwendet werden.

Es ist auch denkbar, daß das Antennenelement 11 außerhalb der Kapselung 5 angeordnet ist und über ein dielektrisches Fenster in den Innenraum 4 strahlt. Hierzu bietet sich beispielsweise als Öffnung ein Einfüllstutzen im Bereich eines Verbindungsflansches zweier Kapselungsabschnitte an, wobei das Antennenelement gegebenenfalls als Stabantenne ausgebildet in die Öffnung eingegossen ist.

Bei Anordnung einer weiteren nicht näher gezeigten Antenne mit einer zugeordneten Steuereinrichtung im Gasraum hinter dem weiteren Stützer 39 ist auch eine Verwendung des Innenraumes 4 der Kapselung 5 als Übertragungsraum möglich, wobei eine geschützte Datenübertragung über lange Strecken möglich ist. Diese Möglichkeit ist bevorzugt bei Rohrleitern einsetzbar. Eine Kombination mit einer gleichzeitigen Sensorabfrage ist denkbar.

Die vorliegende Idee bezieht sich im wesentlichen auf die selektive Erfassung der von den jeweiligen Sensoren, insbesondere der OFWs 7a bis 7d, erfaßten Meßwerte, Größen oder Informationen. Dabei kann zunächst unterschieden werden, ob die OFWs selektiv aufgerufen werden oder nicht.

Ein selektiver Aufruf kann beispielsweise durch unterschiedliche Frequenzen (oder Kanäle) erfolgen. Damit wäre für jeden OFW quasi ein getrennter Übertragungskanal reserviert, wobei das zentralenseitige Aufrufsignal und das OFW-seitige Antwortsignal auf dem jeweils selben Übertragungskanal liegt.

Eine weitere Möglichkeit ist dadurch gegeben, daß mit einem von allen OFWs empfangbaren Aufrufsignal eine Codierung, Kennung oder ein sonstiges Selektionssignal übertragen wird, das in dem jeweils zu aktivierenden OFW erkannt wird, und der dann ein mit der entsprechenden Information enthaltenes Antwortsignal abgibt. Es ist also möglich, daß nur der jeweils angesprochene OFW (oder auch OFW-Gruppe) antwortet.

Weiterhin ist es möglich, daß mit einem gemeinsamen Aufrufsignal von dem Antennenelement 11 alle OFWs 7a bis 7d aktiviert werden, wobei die Selektion nachträglich nach dem Empfang durch das Antennenelement 11 erfolgt. Dies kann beispielsweise dadurch erfolgen, daß mit dem Aufrufsignal der selektierte OFW aufgefordert wird, in seinem Antwortsignal eine Kennung, z.B. einen Impuls oder ein Signalmuster, einzufügen. Das von allen OFWs zusammen abgegebene Signalgemisch wird dann im Hinblick auf die Kennung analysiert, wodurch das entsprechende Antwortsignal in der Überwachungseinrichtung 15 herausgefiltert und selektiert werden kann. Hier ist beispielsweise ein Korrelationsverfahren anwendbar.

Eine besonders einfache Selektion kann dadurch gegeben sein, wenn die OFWs 7a bis 7d auf unterschiedlichen Frequenzen Antwortsignale abgeben, die lediglich durch unterschiedliche Empfangsantennen, die vom gemeinsamen Antennenelement 11 der Überwachungseinrichtung 15 gebildet sind, empfangen und auf unterschiedlichen Leitungen zu einer jeweils getrennten Empfangsauswertung im Sende- und Empfangsteil 17 gelangen. Wichtig ist dabei, daß lediglich eine gemeinsame Zuführung zum Antennenelement 11 oder eine gemeinsame Öffnung benötigt wird.

Es werden also alle OFWs 7a bis 7d von einem Antennenelement 11 aufgerufen, wobei die Selektion der jeweiligen Antwortsignale durch eine entsprechend auf die Signalfrequenz des Antwortsignals des jeweiligen OFWs abgestimmte oder eingestellte Empfangsantenne erfolgt. Dadurch ist keine aufwendige Selektion innerhalb der Überwachungseinrichtung 15 erforderlich. Gegebenenfalls können die jeweiligen Empfangsantennen dann auch beispielsweise mittels eines Multiplex- oder Umschalt-Verfahrens an die gemeinsame Überwachungseinrichtung 15 angeschlossen sein.

Eine weitere Möglichkeit ist die Verwendung eines Zeit-Multiplex-Verfahrens. Die aufgerufenen OFWs 7a bis 7d geben dabei zeitlich gestaffelt nacheinander ihr Antwortsignal auf derselben Frequenz ab. In der Überwachungseinrichtung 15 erfolgt dann die Selektion lediglich durch Selektion des in einem Zeitfenster befindlichen Antwortsignals des jeweiligen OFWs 7a bis 7d.

Eine weitere denkbare Möglichkeit ist, daß die jeweiligen OFWs 7a bis 7d ein unterschiedlich polarisiertes Antwortsignal abgeben, wodurch eine Unterscheidung der jeweiligen Antwortsignale möglich ist. Die Unterscheidung der polarisierten elektromagnetischen Wellen, könnte dann durch mehrere Antennen oder durch ein verstellbares Antennenelement 11 erfolgen. Die Anwendung dieser Technik ist speziell für den hier konkret beschreibbaren, begrenzten Ausbreitungsraum der Wellen, nämlich der Kapselung, denkbar. Es ist auch möglich, daß ein spezielles OFW nur oder zusätzlich Unterscheidungs- oder Hilfsfunktionen umfaßt, die eines der hier aufgezeigten Selektionsverfahren unterstützt oder ergänzt.

Gegebenenfalls sind auch weitere Selektions- oder Unterscheidungsverfahren gemäß dem Stand der Technik möglich, die beispielsweise unter den folgenden Namen bekannt sind: Raum Diversity, Antennen-Diversity, Winkel-Diversity, Feldkomponenten-Diversity oder Protokoll-Austausch (Sekundärradar-Prinzip).

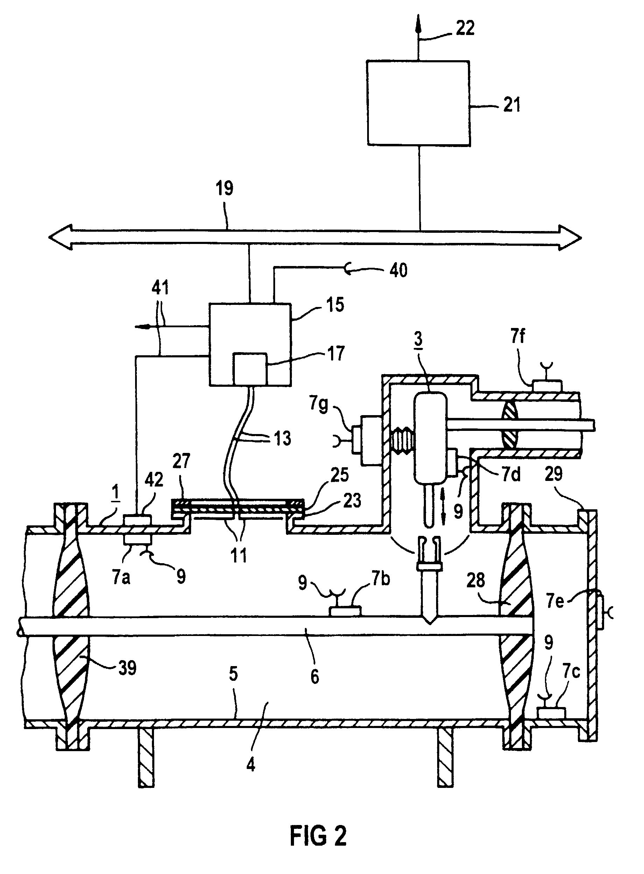

Figur 2 zeigt die Schaltanlage 1, bei der zusätzlich zu den bisherigen OFWs 7a bis 7d außerhalb der Kapselung 5 weitere OFWs 7e bis 7g angeordnet sind. Diese sind beispielsweise zur Aufnahme einer Außentemperatur (7e), einer Schaltstangenstellung (7f) oder einer magnetischen Information (7g), z.B. von einem Stellungsgeber, ausgebildet.

Da das Antennenelemente 11 der Überwachungseinrichtung 15 innerhalb der Kapselung 5 einem abschirmenden Einfluß unterliegt, ist der Überwachungseinrichtung 15 als zusätzliche Schnittstelle eine Antenne 40 zugeordnet, die außerhalb der Kapselung 5 angeordnet ist. Diese ist speziell für die außenliegenden OFWs 7e bis 7g zuständig, die gegebenenfalls auch anderen Anlagenteilen oder Geräten, z.B. einem Freiluftschalter oder seinem Schaltgestänge, zugeordnet sein können.

Selbstverständlich kann die Abfrage der außenliegenden OFWs auch von einer weiteren nicht näher gezeigten Steuer- und Überwachungseinrichtung erfolgen, die jedoch dann datentechnisch mit einer gemeinsamen übergeordneten Einrichtung, z.B. der Zentrale 21, verbunden ist. Optional sind auch weitere Schnittstellen 41 möglich, über die auch sonstige Sensoreinrichtungen, z.B. Schutzeinrichtungen, optische Strom- und Spannungswandler oder ähnliche wie oben bereits aufgeführte Sensoren, angeschlossen werden können, die jedoch im Unterschied zu den oben beschriebenen leitungsgebunden sind. Der Sensor 42 ist hierfür ein Beispiel. Als Übertragungsleitungen sind dabei beispielsweise Drahtleitungen oder optische Leitungen möglich.

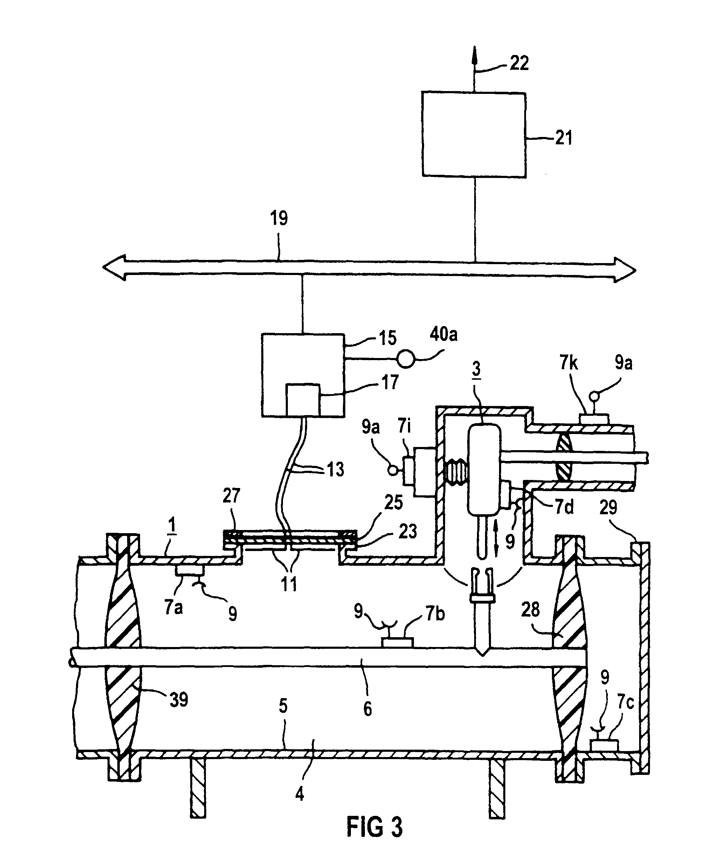

FIG 3 zeigt eine weitere Variante, bei der die Informationsübertragung zwischen der Überwachungseinrichtung 15 und den außenliegenden OFWs 7i und 7k auf optische Weise erfolgt. Die Überwachungseinrichtung 15 weist dazu als Antennenelement ein Infrarot-Sende- und Empfangselement 40a auf. Die Antennenelemente 9a der OFWs 7i und 7k sind dementsprechend als Infrarotmittel ausgebildet.

Diese Art der Informationsübertragung läßt sich selbstverständlich auch auf die Informationsübertragung innerhalb der Schaltanlage 1 innerhalb eines geschlossenen Gasraumes anwenden. Die Variante gemäß FIG 3 ist selbstverständlich auch mit einer akustischen Informationsübertragung, z.B. im Ultraschallbereich, sinngemäß ausführbar.

Die OFWs 7a bis 7k können als aktives oder auch als passives Bauteil ausgebildet sein. Bei Ausbildung als aktives Bauteil ist eine zusätzliche Energiezufuhr erforderlich. Diese kann beispielsweise durch einen Energiespeicher, insbesondere eine Batterie, durch eine am Einbauort vorhandene Energiequelle oder durch eine zusätzliche Energieübertragung bereitgestellt werden. Bevorzugt erfolgt diese Übertragung mit dem von dem Antennenelement 11 ausgesandten Aufrufsignal, das die entsprechende Leistung mit überträgt. Es ist jedoch auch denkbar, daß die Zusatzenergie auf anderem Wege, z.B. über Lichtleiter oder auf funk- oder optisch-technischem Wege, übertragen wird. Gegebenenfalls ist auch am Einbauort des OFWs eine Energieaufnahme möglich.

Die beschriebenen Sensoren können bevorzugt in feldfreien oder feldreduzierten Räumen der Anlage angeordnet werden. Damit sind Querempfindlichkeiten verhindert. Die Unterbringung erfolgt dabei an einer für die jeweilige Meßgröße geeigneten Stelle, die gegebenenfalls durch die Formgebung der Kapselung 5 oder ihrer Einbauten geschaffen werden kann.

Selbstverständlich sind die obengenannten einzelnen Merkmale und Ausführungen der vorliegenden neuen Idee im Rahmen des fachmännischen Handels miteinander oder mit Merkmalen aus dem Stand der Technik kombinierbar, ohne daß der Grundgedanke der Idee verlassen wird.

## Patentansprüche

1. Gekapselte Anlage (1) für elektrische Energie mit mehreren im Innenraum (4) der Kapselung (5) mit ihren jeweiligen Sendeempfangselementen (9,9a) angeordneten Sensoren (7a bis 7k), wobei eine Überwachungseinrichtung (15) mit einem Sendeempfangselement (11) zum Informationsaustausch mit den Sensoren (7a bis 7k) vorgesehen ist, wobei das Antennenelement (11) der Überwachungseinrichtung (15) an der Kapselung (5) angeordnet und auf den Innenraum (4) gerichtet ist, und wobei die Sensoren (7a bis 7k) selektiv abfragbar und zumindest teilweise in unterschiedlichen Gasräumen angeordnet sind.

2. Gekapselte Anlage nach Anspruch 1, wobei die Sensoren (7a bis 7k) zumindest teilweise zum Erfassen unterschiedlicher Meßgrößen ausgebildet sind.

3. Gekapselte Anlage nach einem der Ansprüche 1 oder 2, wobei die Sensoren (7a bis 7k) als aktive oder passive Bauteile ausgebildet sind.

4. Gekapselte Anlage nach einem der Ansprüche 1 bis 3, wobei die Sensoren (7a bis 7k) jeweils auf dem Potential der Kapselung (5) oder auf dem Potential eines Leiters (6) in der Kapselung (5) angeordnet sind.

5. Gekapselte Anlage nach einem der Ansprüche 1 bis 4, wobei die Überwachungseinrichtung (15) zumindest eine Schnittstelle zum Informationsaustausch mit weiteren Sensoren, Meßfühlern oder Erfassungseinrichtungen aufweist.

6. Gekapselte Anlage nach Anspruch 5, wobei die weitere Schnittstelle als leitungsgebundene Schnittstelle (41), Insbesondere elektrische oder optische Schnittstelle (40a), oder als drahtlose Schnittstelle (40,40a) ausgebildet ist.

7. Gekapselte Anlage nach Anspruch 5 oder 6, wobei eine Schnittstelle zur Ankopplung einer neben- oder übergeordneten Überwachungseinrichtung vorgesehen ist.

8. Gekapselte Anlage nach einem der Ansprüche 1 bis 7, wobei für die selektive Abfrage eine Codierung vorgesehen ist.

9. Gekapselte Anlage nach Anspruch 8, wobei für die Codierung den jeweiligen Sensoren (7a bis 7k) unterschiedliche Frequenzen oder Kanäle für die Informationsübertragung zugeordnet sind.

10. Gekapselte Anlage nach Anspruch 8, wobei die Codierung durch ein Frequenz- oder Zeitmultiplexverfahren erfolgt.

11. Gekapselte Anlage nach Anspruch 8, wobei die Codierung durch Polarisation oder Korrelation erfolgt.

12. Gekapselte Anlage nach Anspruch 8, wobei die Codierung durch eine Kennung im Sende - oder Antwortsignal erfolgt.

13. Gekapselte Anlage nach einem der Ansprüche 1 bis 12, wobei die Kapselung (5) metallisch ist.

14. Gekapselte Anlage nach einem der Ansprüche 1 bis 13, wobei in der Kapselung (5) zumindest ein Schaltgerät (3) oder ein Leiter(6) für Hoch- oder Mittelspannung angeordnet ist.

15. Gekapselte Anlage nach einem der Ansprüche 1 bis 14, wobei die Sendeempfangselemente (9,9a,11,40a) für die Übertragung optischer, akustischer oder elektromagnetischer Wellen ausgebildet sind.

16. Gekapselte Anlage nach einem der Ansprüche 1 bis 15, wobei die Sensoren als Oberflächenwellensensoren (7a bis 7k) ausgebildet sind.

## Claims

1. Encapsulated installation (1) for electrical power having a plurality of sensors (7a to 7k) which are arranged in the interior (4) of the encapsulation (5) with their respective transmitting/receiving elements (9, 9a), a monitoring device (15) having a transmitting/receiving element (11) being provided for information interchange with the sensors (7a to 7k), the antenna element (11) of the monitoring device (15) being arranged on the encapsulation (5) and being directed towards the interior (4), and it being possible to interrogate the sensors (7a to 7k) selectively, and at least some of the sensors (7a to 7k) being arranged in different gas areas.

2. Encapsulated installation according to Claim 1, at least some of the sensors (7a to 7k) being designed to detect different measurement variables.

3. Encapsulated installation according to one of Claims 1 or 2, the sensors (7a to 7k) being designed as active or passive components.

4. Encapsulated installation according to one of Claims 1 to 3, the sensors (7a to 7k) in each case being arranged in the encapsulation (5) at the potential of the encapsulation (5) or at the potential of a conductor (6).

5. Encapsulated installation according to one of Claims 1 to 4, the monitoring device (15) having at least one interface for information interchange with other sensors, measurement sensors or detection devices.

6. Encapsulated installation according to Claim 5, the further interface being designed as a cable-based interface (41), in particular an electrical or optical interface (40a), or as a wire-free interface (40, 40a).

7. Encapsulated installation according to Claim 5 or 6, an interface being provided for coupling a monitoring device, which is at an equivalent or higher level, thereto.

8. Encapsulated installation according to one of Claims 1 to 7, coding being provided for the selective interrogation.

9. Encapsulated installation according to Claim 8, different frequencies or channels being assigned for information transmission to the respective sensors (7a to 7k), for coding.

10. Encapsulated installation according to Claim 8, the coding being carried out by means of a frequency or time division multiplex method.

11. Encapsulated installation according to Claim 8, the coding being carried out by polarization or correlation.

12. Encapsulated installation according to Claim 8, the coding being carried out by means of an identification in the transmitted or response signal.

13. Encapsulated installation according to one of Claims 1 to 12, the encapsulation (5) being metallic.

14. Encapsulated installation according to one of Claims 1 to 13, at least one switching device (3) or a conductor (6) for high or medium voltage being arranged in the encapsulation (5).

15. Encapsulated installation according to one of Claims 1 to 14, the transmitting/receiving elements (9, 9a, 11, 40a) being designed for the transmission of optical, acoustic or electromagnetic waves.

16. Encapsulated installation according to one of Claims 1 to 15, the sensors being designed as surface acoustic wave sensors (7a to 7k).

## Revendications

1. Installation blindée (1) pour énergie électrique comportant plusieurs capteurs (7a à 7k) qui sont mis dans l'espace intérieur (4) du blindage (5) avec leurs éléments d'émission et de réception (9, 9a) respectifs, dans laquelle il est prévu un dispositif de surveillance (15) avec son élément d'émission et de réception (11) pour l'échange d'informations avec les capteurs (7a à 7k), l'élément antenne (11) du dispositif de surveillance (15) est mis sur le blindage (5) et est orienté sur l'espace intérieur (4) et les capteurs (7a à 7k) peuvent être interrogés sélectivement et sont mis au moins en partie dans des compartiments de gaz différents.

2. Installation blindée selon la revendication 1, dans laquelle les capteurs (7a à 7k) sont conçus au moins en partie pour la détection de différentes grandeurs mesurées.

3. Installation blindée selon l'une des revendications 1 ou 2, dans laquelle les capteurs (7a à 7k) sont conçus comme des composants actifs ou passifs.

4. Installation blindée selon l'une des revendications 1 à 3, dans laquelle les capteurs (7a à 7k) sont mis chacun sur le potentiel du blindage (5) ou sur le potentiel d'un conducteur (6) dans le blindage (5).

5. Installation blindée selon l'une des revendications 1 à 4, dans laquelle le dispositif de surveillance (15) comporte au moins une interface pour l'échange d'informations avec d'autres capteurs, détecteurs ou dispositifs d'acquisition.

6. Installation blindée selon la revendication 5, dans laquelle l'autre interface est conçue comme une interface (41) par lignes, notamment une interface électrique ou optique (40a), ou comme une interface sans fil (40, 40a).

7. Installation blindée selon la revendication 5 ou 6, dans laquelle il est prévu une interface pour le couplage d'un dispositif de surveillance de même rang ou de rang supérieur.

8. Installation blindée selon l'une des revendications 1 à 7, dans laquelle un codage est prévu pour l'interrogation sélective.

9. Installation blindée selon la revendication 8, dans laquelle, pour le codage, il est associé aux capteurs respectifs (7a à 7k) différentes fréquences ou différents canaux pour la transmission d'informations.

10. Installation blindée selon la revendication 8, dans laquelle le codage s'effectue au moyen d'un procédé de multiplexage fréquentiel ou temporel.

11. Installation blindée selon la revendication 8, dans laquelle le codage s'effectue au moyen d'une polarisation ou d'une corrélation.

12. Installation blindée selon la revendication 8, dans laquelle le codage s'effectue au moyen d'un identificateur dans le signal émis ou dans le signal de réponse.

13. Installation blindée selon l'une des revendications 1 à 12, dans laquelle le blindage (5) est métallique.

14. Installation blindée selon l'une des revendications 1 à 13, dans laquelle il est prévu dans le blindage (5) au moins un appareil de distribution (3) ou un conducteur (6) pour haute ou moyenne tension.

15. Installation blindée selon l'une des revendications 1 à 14, dans laquelle les éléments d'émission et de réception (9, 9a, 11, 40a) sont conçus pour la transmission d'ondes optiques, acoustiques ou électromagnétiques.

16. Installation blindée selon l'une des revendications 1 à 15, dans laquelle les capteurs sont conçus comme des capteurs d'ondes de surface (7a à 7k).
